# EUROPEAN PATENT APPLICATION

(11) **EP 4 696 431 A1**
(43) Date of publication of application: **18.02.2026**
(21) Application number: 25195385.7
(22) Date of filing: 12.08.2025
(51) Int. Cl.: B21J 15/04, F16B 41/00

(54) **CAPTIVE FASTENER QUICK-RELEASE END EFFECTOR**

(30) Priority: 13.08.2024 US 202418802984
(71) Applicant: Lockheed Martin Corporation, Bethesda, MD 20817-1877 (US)
(72) Inventor: Hernandez, Andrew J., Midlothian TX (US); Salcedo, Esteban, River Oaks TX (US); Winter III, Max N., Fort Worth TX (US)
(74) Representative: Barker Brettell LLP

(57) **Abstract**

A system (100) for swaging an end of a fastener (130) includes a pneumatic swaging tool (110) and a quick-release end effector (120) configured to couple to the pneumatic swaging tool (110). The quick-release end effector (120) includes a body (122), a clamping member (126), and a cam lock (124). The body (122) of the quick-release end effector (120) includes a plurality of stationary threads (128), and the clamping member (126) of the quick-release end effector (120) includes a plurality of moving threads (121). The cam lock (124) of the quick-release end effector (120) is configured to operate between an open position and a closed position. In the closed position, a locking edge of the cam lock (124) causes threads of the fastener (130) to be clamped between the moving threads of the clamping member (126) and the stationary threads of the body (122), thereby securing the fastener (130) during swaging operations by the pneumatic swaging tool (110).

## Description

### TECHNICAL FIELD

This disclosure generally relates to captive fasteners, and more specifically to a captive fastener quick-release end effector.

### BACKGROUND

Captive fasteners are utilized in many different industries and applications. For example, captive fasteners may be used to assemble aircraft and other vehicles. Typically, a captive fastener is inserted into a component such as an aircraft panel and then permanently locked into place using a captive ring. The process of locking a captive fastener into place using a captive ring is a laborious and time-consuming process that includes swaging the end of captive fastener.

### SUMMARY

In some embodiments, a system for swaging an end of a fastener includes a pneumatic swaging tool and a quick-release end effector configured to couple to the pneumatic swaging tool. The quick-release end effector includes a body, a clamping member, and a cam lock. The body of the quick-release end effector includes a plurality of stationary threads, and the clamping member of the quick-release end effector includes a plurality of moving threads. The cam lock of the quick-release end effector is configured to operate between an open position and a closed position. In the closed position, a locking edge of the cam lock causes threads of the fastener to be clamped between the moving threads of the clamping member and the stationary threads of the body, thereby securing the fastener during swaging operations by the pneumatic swaging tool.

In some embodiments, a quick-release end effector that is configured to couple to a swaging tool includes a body, a clamping member, and a cam lock. The body of the quick-release end effector includes a plurality of stationary threads, and the clamping member of the quick-release end effector includes a plurality of moving threads. The cam lock of the quick-release end effector is configured to operate between an open position and a closed position. In the closed position, a locking edge of the cam lock causes threads of a fastener to be clamped between the moving threads of the clamping member and the stationary threads of the body, thereby securing the fastener during swaging operations by the swaging tool.

In some embodiments, a method for swaging an end of a fastener includes coupling a quick-release end effector to a swaging tool. The quick-release end effector includes a body, a clamping member, and a cam lock. The body of the quick-release end effector includes a plurality of stationary threads, and the clamping member of the quick-release end effector includes a plurality of moving threads. The cam lock of the quick-release end effector is configured to operate between an open position and a closed position. The method further includes operating the cam lock to the open position. The method further includes inserting the end of the fastener to be swaged into the quick-release end effector such that threads of the fastener contact the stationary threads of the body. The method further includes operating the cam lock to the closed position in order cause the threads of the fastener to be clamped between the moving threads of the clamping member and the stationary threads of the body. The method further includes operating the swaging tool in order to swage the end of the fastener.

Technical advantages of certain embodiments may include systems, devices, and methods for quickly and easily swaging the ends of captive fasteners. By providing a captive fastener quick-release end effector that attaches to a swaging tool, the swaging process of captive fasteners may be easily and quickly performed without requiring the captive fasteners to be screwed into or unscrewing from the swaging tool. This greatly reduces the time required to affix captive fasteners. In applications requiring hundreds or even thousands of captive fasteners, the disclosed embodiments provide a significant savings in the amount of labor and time required to install captive fasteners.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present disclosure and its advantages, reference is now made to the following descriptions taken in conjunction with the accompanying drawings, in which:
FIGURE 1 is an illustration of a fastener swaging system, according to particular embodiments.
FIGURE 2 is an illustration of another view of the fastener swaging system of FIGURE 1, according to particular embodiments.
FIGURE 3 is a front view of a quick-release end effector of the fastener swaging system of FIGURE 1, according to particular embodiments.
FIGURES 4A-4E are various views of a body of the quick-release end effector of FIGURES 1-3, according to particular embodiments.
FIGURES 5A-5E are various views of a clamping member of the quick-release end effector of FIGURES 1-3, according to particular embodiments.
FIGURES 6A-6B are various views of a cam lock of the quick-release end effector of FIGURES 1-3, according to particular embodiments.
FIGURE 7 is a chart illustrating a method for swaging an end of a captive fastener, according to particular embodiments.

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION

The disclosure presented in the following written description and the various features and advantageous details thereof, are explained more fully with reference to the nonlimiting examples included in the accompanying drawings and as detailed in the description. Descriptions of well-known components have been omitted to not unnecessarily obscure the principal features described herein. The examples used in the following description are intended to facilitate an understanding of the ways in which the disclosure can be implemented and practiced. A person of ordinary skill in the art would read this disclosure to mean that any suitable combination of the functionality or exemplary embodiments below could be combined to achieve the subject matter claimed. The disclosure includes either a representative number of species falling within the scope of the genus or structural features common to the members of the genus so that one of ordinary skill in the art can recognize the members of the genus. Accordingly, these examples should not be construed as limiting the scope of the claims.

A person of ordinary skill in the art would understand that any system claims presented herein encompass all of the elements and limitations disclosed therein, and as such, require that each system claim be viewed as a whole. Any reasonably foreseeable items functionally related to the claims are also relevant. The Examiner, after having obtained a thorough understanding of the disclosure and claims of the present application has searched the prior art as disclosed in patents and other published documents, i.e., nonpatent literature. Therefore, as evidenced by issuance of this patent, the prior art fails to disclose or teach the elements and limitations presented in the claims as enabled by the specification and drawings, such that the presented claims are patentable under the applicable laws and rules of this jurisdiction.

Captive fasteners are utilized in many different industries and applications. For example, captive fasteners may be used to assemble aircraft and other vehicles. Typically, a captive fastener is inserted into a component such as an aircraft panel and then permanently locked into place using a captive ring. The process of locking a captive fastener into place using a captive ring is a laborious and time-consuming process that includes swaging the end of captive fastener.

In some situations, certain pneumatic tools may be used for swaging (i.e., deforming) the end of a captive fastener, thereby preventing a captive ring from being removed from the captive fastener and locking the captive fastener into place. For example, an air-powered rivet gun having a hammer-driven anvil may be used for swaging the end of a captive fastener to prevent removal of the captive ring. Typical rivet guns used for this process, however, require the captive fastener to be manually screwed into a threaded bushing of the rivet gun as far as possible before the swaging process. Furthermore, the captive fastener must then be manually unscrewed from the threaded bushing after the swaging has been completed. Manually screwing and unscrewing captive fasteners from such a tool, especially in applications that require hundreds or thousands of captive fasteners, requires an extensive amount of labor and time.

To address these and other problems with existing solutions for swaging the ends of captive fasteners, the disclosed embodiments provide a captive fastener quick-release end effector that allows a captive fastener to be quickly inserted and removed from a swaging tool such as a pneumatic rivet gun. Instead of requiring a captive fastener to be fully screwed into and then unscrewed from a swaging tool, the captive fastener quick-release end effector of the disclosed embodiments includes a quick release design that permits the swaging tool to quickly and easily attach to the captive fastener. The quick release design of the disclosed embodiments includes a body that mates to the swaging tool and includes a stationary half-thread that mates to the captive fastener. In addition, the body includes a moving thread that mates with the body and is held captive using dowel pins. The moving thread is operated (i.e., engaged and disengaged) using a cam lock. When engaged, the moving thread and stationary half-thread create a complete thread pattern that supports the captive fastener during the swaging process. When disengaged, the moving thread provides enough clearance for the captive fastener to be inserted and removed without threading or unthreading. As a result, the swaging process of captive fasteners may require less time than conventional methods, thereby increasing the efficiency of production processes involving captive fasteners.

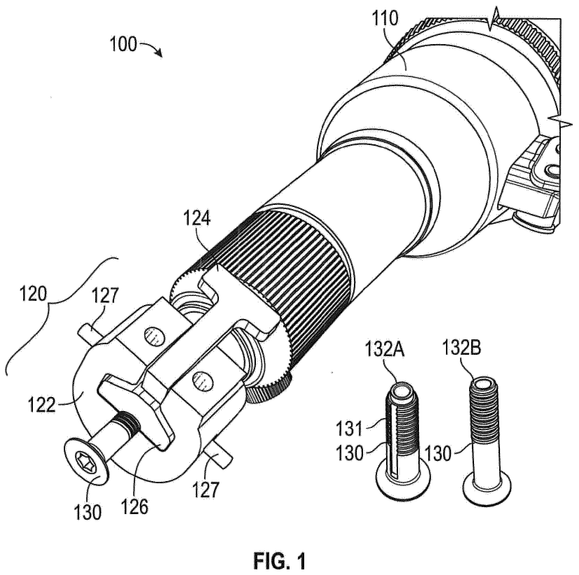

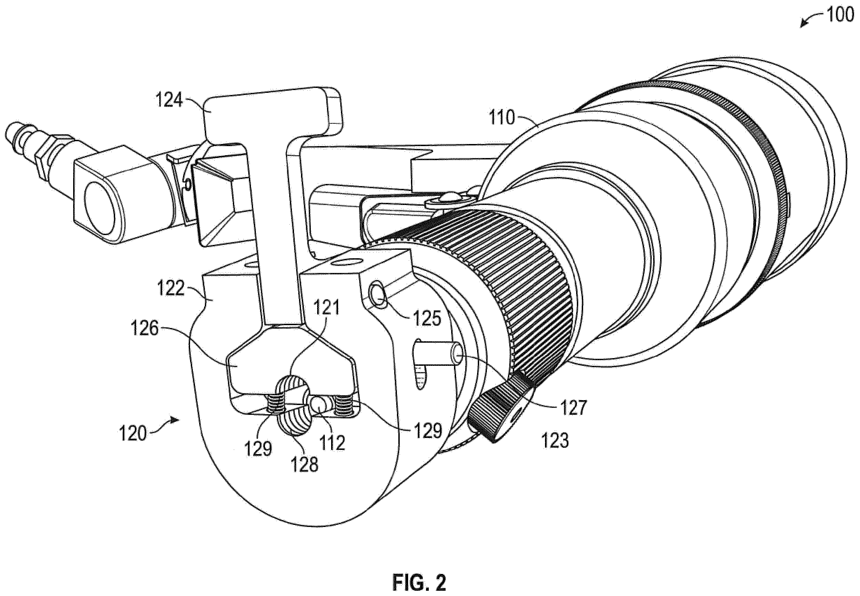

FIGURES 1 and 2 are diagrams illustrating a fastener swaging system 100, according to particular embodiments. Fastener swaging system 100 includes a swaging tool 110 and a quick-release end effector 120 that may be coupled to swaging tool 110. Quick-release end effector 120 includes a body 122, a cam lock 124, and a clamping member 126. Body 122 includes stationary threads 128 and clamping member 126 includes moving threads 121.

In general, fastener swaging system 100 is used to quickly and efficiently swage an end 132 of a fastener 130 during manufacturing operations. To do so, an unswaged end 132A of fastener 130 is placed into quick-release end effector 120 such that threads 131 of fastener 130 contact stationary threads 128. Next, cam lock 124 may be operated to a closed position as illustrated in FIGURE 1 in order to cause clamping member 126 to clamp onto fastener 130. In doing so, moving threads 121 of clamping member 126 contact threads 131 of fastener 130. Once clamping member 126 is fully clamped onto fastener 130, swaging tool 110 may be operated in order to cause swaging tool driver 112 to hammer unswaged end 132A of fastener 130, thereby resulting in a swaged end 132B. During the swaging process by swaging tool 110, stationary threads 128 and moving threads 121 firmly secure fastener 130 inside quick-release end effector 120, thereby resulting in a quick and complete swaging of fastener 130. After the swaging process has been completed, cam lock 124 may be operated to an open position as illustrated in FIGURES 2-3 in order to release fastener 130 from quick-release end effector 120. As a result, swaging operations of captive fasteners may require less time than conventional methods, thereby increasing the efficiency of production processes involving captive fasteners.

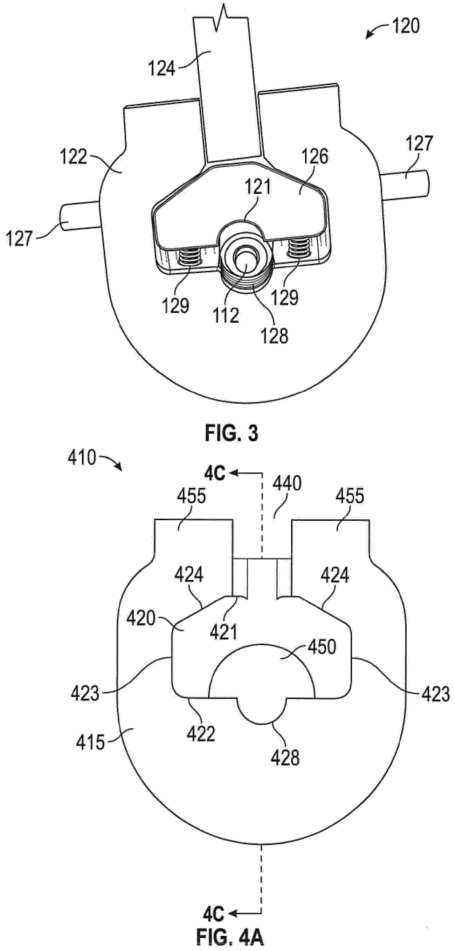

Swaging tool 110 is any appropriate tool that is capable of swaging end 132 of fastener 130. In some embodiments, swaging tool 110 is a pneumatic swaging tool (e.g., a pneumatic rivet gun). In some embodiments, swaging tool 110 includes a swaging tool driver 112 as illustrated in FIGURE 3. Swaging tool driver 112 may be a hammer-driven anvil that is used to swage an end 132 of fastener 130. For example, swaging tool 110 may drive swaging tool driver 112 using a hammer action against end 132 of fastener 130 until end 132 is deformed as illustrated in FIGURE 1 (e.g., swaged end 132B).

Quick-release end effector 120 is a device that may be coupled to swaging tool 110 that allows fastener 130 to be quickly inserted and removed from swaging tool 110 (i.e., without requiring fastener 130 to be screwed into and unscrewed from quick-release end effector 120). FIGURE 3 illustrates a front view of quick-release end effector 120, according to certain embodiments. Instead of requiring fastener 130 to be fully screwed into and then unscrewed from swaging tool 110, quick-release end effector 120 includes a quick release design that permits swaging tool 110 to quickly and easily attach to fastener 130. The quick release design of quick-release end effector 120 includes body 122 that mates to swaging tool 110 and includes stationary threads 128 that mate to fastener 130. In addition, quick-release end effector 120 includes clamping member 126 that mates with body 122 and is held captive using guide pins 127. Clamping member 126 includes moving threads 121 and is operated (i.e., moved up and down) using cam lock 124. Cam lock 124 may be coupled to body 122 using a cam dowel 125 that enables cam lock 124 to move between a closed position (e.g., FIGURE 1) and an open position (e.g., FIGURES 2-3) by pivoting about cam dowel 125. When cam lock 124 is moved to its closed position and clamping member 126 is caused to move downward, moving threads 121 and stationary half-threads 128 create a complete thread pattern that supports fastener 130 during the swaging process. When cam lock 124 is moved to its open position and clamping member 126 is caused to move upward, clamping member 126 provides enough clearance for fastener 130 to be inserted and removed without threading or unthreading. As a result, the swaging process of fastener 130 may require less time than conventional methods, thereby increasing the efficiency of manufacturing and production processes involving fasteners 130.

To cause clamping member 126 to move upwards when cam lock 124 is operated to its open position, some embodiments of quick-release end effector 120 include one or more springs 129. For example, as illustrated in FIGURE 3, some embodiments include two springs 129 that contact a bottom side of clamping member 126. In these embodiments, clamping member 126 may include one or more cavities (e.g., spring cavities 515) on a bottom side of clamping member 126, and body 122 may include one or more spring apertures (e.g., spring apertures 425) to contain springs 129. Each spring 129 may be installed in a particular one of the spring apertures of body 122 such that spring 129 contacts a particular one of the spring cavities of clamping member 126, thereby forcing clamping member 126 upwards when cam lock 124 is operated to its open position. In other embodiments, any other appropriate mechanism may be used to move clamping member 126 upwards when cam lock 124 is operated to its open position (e.g., magnets, pneumatic pressure, electric motors, etc.).

In some embodiments, clamping member 126 of quick-release end effector 120 includes two guide pins 127 protruding from opposite sides of clamping member 126, as illustrated in FIGURES 1-3. In these embodiments, body 122 includes corresponding guide slots 123, and each guide pin 127 extends through a particular one of guide slots 123. In general, guide pins 127 and guide slots 123 control the movements of clamping member 126 to be perpendicular movements with respect to stationary threads 128. That is, guide pins 127 and guide slots 123 limit clamping member 126 to only move upwards (i.e., perpendicularly away from stationary threads 128) or downwards (i.e., perpendicularly towards stationary threads 128). This helps align moving threads 121 of clamping member 126 to threads 131 of fastener 130 when cam lock 124 is operated to the closed position.

Moving threads 121 and stationary threads 128 may be any appropriate thread pattern and size according to the desired application. For example, moving threads 121 and stationary threads 128 may be 1/2 UNF 10-32 threads. In some embodiments, quick-release end effector 120 is manufactured to fit a specific fastener with specific thread sizes. That is, quick-release end effector 120 must be changed for each different size of fastener 130. In other embodiments, certain components of quick-release end effector 120 may be swapped out in order to accommodate different sizes of fastener 130. For example, instead of stationary threads 128 being machined directly into body 122, other embodiments may have a removable member that includes stationary threads 128. This removable member, along with clamping member 126, may be removed and replaced with similar components that have different sizes of moving threads 121 and stationary threads 128. In this way, a single quick-release end effector 120 may be able to accommodate a variety of sizes of fasteners 130.

As illustrated in FIGURES 1-3, moving threads 121 and stationary threads 128 together form a complete thread pattern to match threads 131 of fastener 130. That is, moving threads 121 and stationary threads 128 are each only half (or less) of a full thread pattern (i.e., a semicylinder shape) when cam lock 124 is in the open position. However, when cam lock 124 is in the closed position and clamping member 126 is lowered towards stationary threads 128, moving threads 121 and stationary threads 128 form a complete thread pattern in order to engage both sides of threads 131 of fastener 130. As a result, fastener 130 is held securely in place while swaging tool 110 performs swaging operations on end 132 of fastener 130.

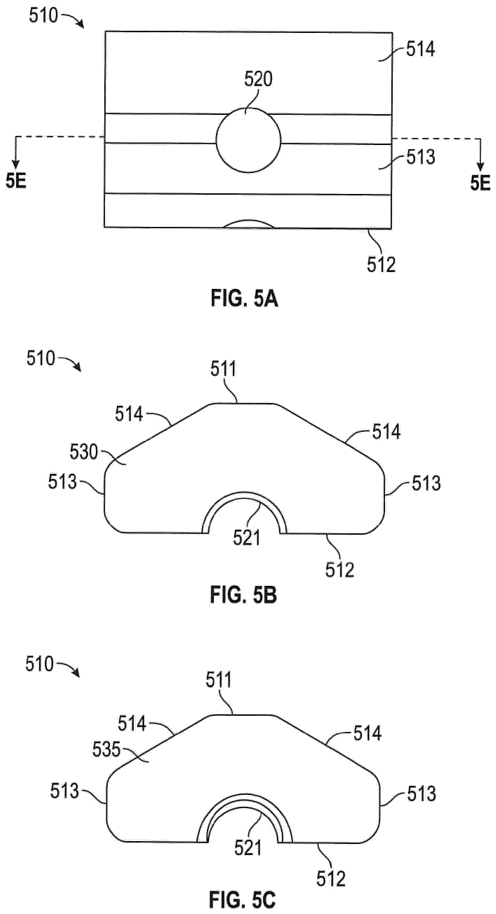

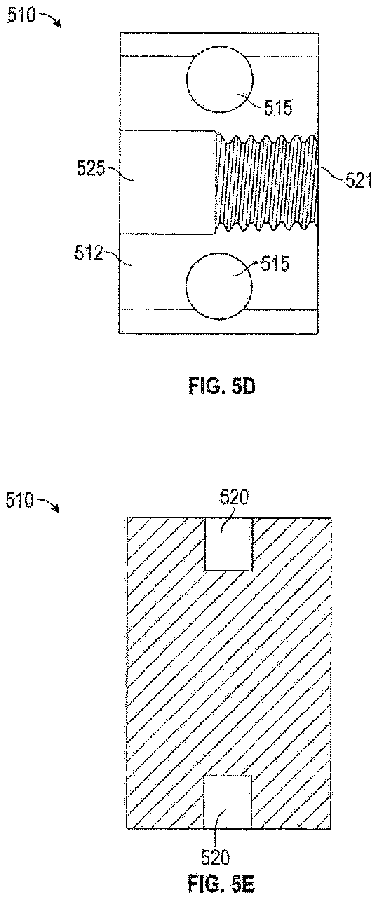

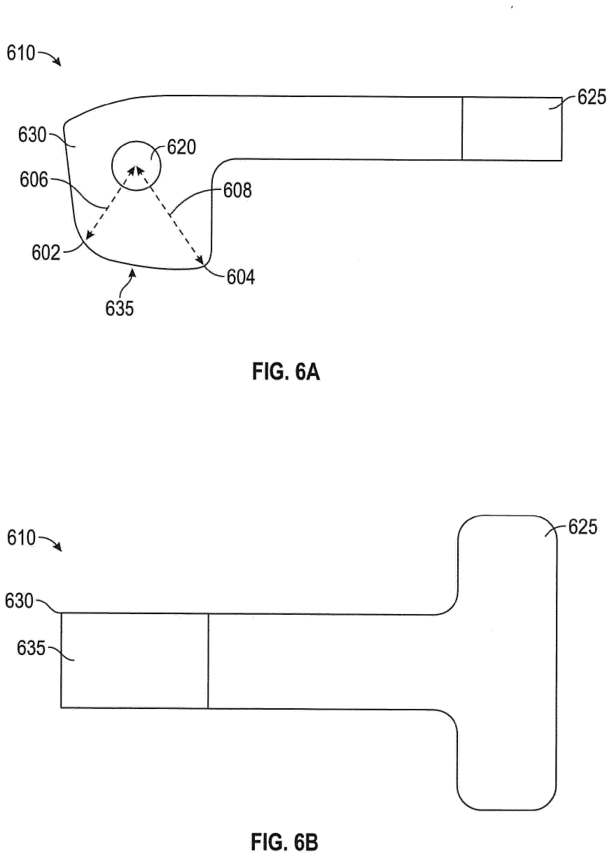

The various components of certain embodiments of quick-release end effector 120 are illustrated and described in more detail below in reference to FIGURES 4A-6B. FIGURES 4A-4E illustrate various views of a body 410 that may be used as body 122 of quick-release end effector 120. FIGURES 5A-5E illustrate various views of a clamping member 510 that may be used as clamping member 126 of quick-release end effector 120. FIGURES 6A-6B illustrates various views of a cam lock 610 that may be used as cam lock 124 of quick-release end effector 120.

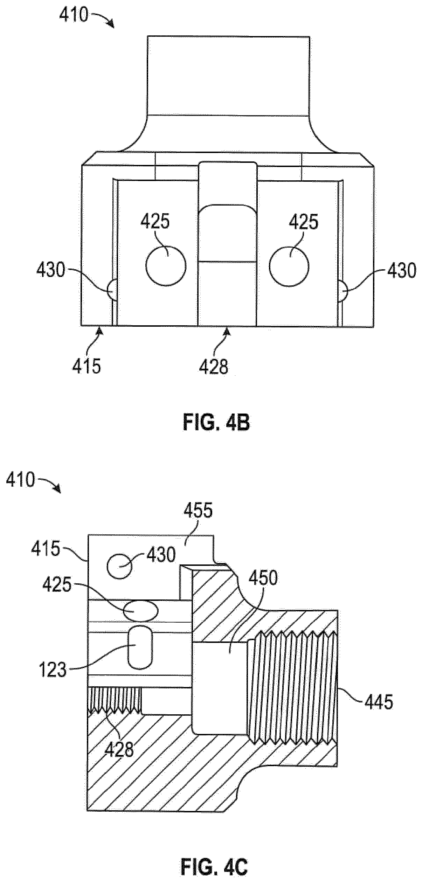

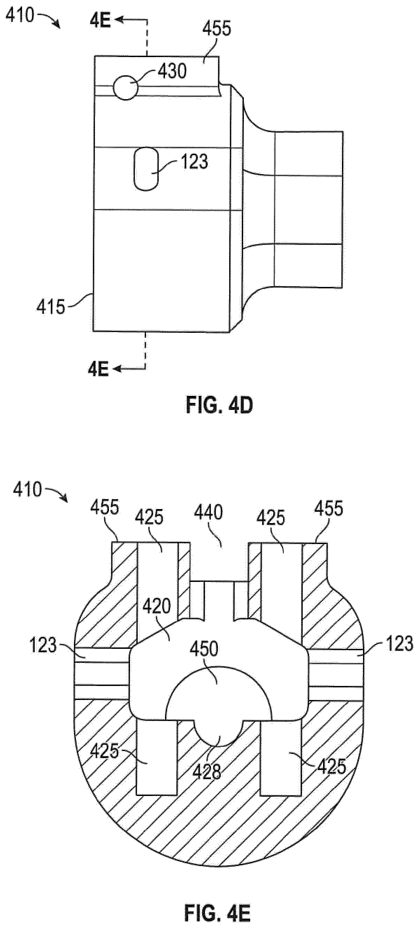

FIGURES 4A-4E illustrate various views of a body 410 that may be used as body 122 of quick-release end effector 120, according to particular embodiments. FIGURE 4A illustrates a front view of body 410, FIGURE 4B illustrates a top-down view of body 410, FIGURE 4C illustrates a cutaway view of body 410 along the line indicated in FIGURE 4A, FIGURE 4D illustrates a side view of body 410, and FIGURE 4E illustrates a cutaway view of body 410 along the line indicated in FIGURE 4D.

As illustrated in FIGURES 4A-4E, some embodiments of body 410 include a front face 415, a clamping member chamber 420, spring apertures 425, stationary threads 428, cam dowel apertures 430, guide slots 123, a cam lock notch 440, coupling threads 445, a driver aperture 450, and cam lock shoulders 455. In some embodiments, front face 415 is generally flat and is flush with a front face of clamping member 126. Clamping member chamber 420 houses clamping member 126 and generally matches the shape of clamping member 126. For example, some embodiments of clamping member chamber 420 include a top side 421, a bottom side 422, two vertical sides 423, and two sloped sides 424. Each sloped side 424 is between top side 421 and one of the vertical sides 423, as illustrated. Vertical sides 423 are elongated from corresponding sides of clamping member 126 (i.e., vertical sides 513) to allow clamping member 126 to move upwards and downwards within clamping member chamber 420.

Some embodiments of body 410 include one or more spring apertures 425 for housing springs 129. In some embodiments, spring apertures 425 extend through cam lock shoulders 455, through clamping member chamber 420, and then below bottom side 422 of clamping member chamber 420, as illustrated in FIGURE 4E. Spring apertures 425 may be any appropriate size according to springs 129.

Some embodiments of body 410 include cam dowel apertures 430. In general, cam dowel apertures 430 are holes through cam lock shoulders 455. Cam dowel 125 may be inserted through cam dowel apertures 430 and cam lock 124 in order to secure cam lock 124 to body 122. This permits cam lock 124 to pivot about cam dowel 125 between the open and closed positions.

Some embodiments of body 410 include a cam lock notch 440. As illustrated best in FIGURES 4A and 4E, cam lock notch 440 is a separation between cam lock shoulders 455 for supporting cam lock 124. A portion of cam lock 124 rests within cam lock notch 440 between cam lock shoulders 455. Cam lock notch 440 provides an area in which to allow locking edge 635 of cam lock 124 to contact clamping member 126.

Some embodiments of body 410 include coupling threads 445, as illustrated best in FIGURE 4C. Coupling threads 445 permit quick-release end effector 120 to be easily attached and detached from swaging tool 110. Coupling threads 445 may be any appropriate size and pattern for mating quick-release end effector 120 with swaging tool 110.

Some embodiments of body 410 include a driver aperture 450. In general, driver aperture 450 is an opening within body 122 that permits swaging tool driver 112 to contact end 132 of fastener 130 during swaging operations. In some embodiments, driver aperture 450 is tube-shaped and has a larger diameter than swaging tool driver 112.

Some embodiments of body 410 include cam lock shoulders 455. Cam lock shoulders 455 provide mechanical support and a pivot location for cam lock 124. Cam lock shoulders 455 may have any appropriate shape and dimensions in order to accommodate cam lock 124.

FIGURES 5A-5E illustrate various views of a clamping member 510 that may be used as clamping member 126 of quick-release end effector 120, according to particular embodiments. In some embodiments, clamping member 510 includes spring cavities 515, guide pin cavities 520, moving threads 521 (i.e., moving threads 121), and a driver aperture 525. Spring cavities 515, in some embodiments, are cylindrical cavities on bottom side 512 of clamping member 510 for receiving springs 129. For example, clamping member 510 may include two spring cavities 515 as illustrated in FIGURE 5D.

In some embodiments, clamping member 510 includes guide pin cavities 520 for supporting and containing guide pins 127. Guide pin cavities 520 may be cylindrical in shape and may be slightly smaller in diameter than guide pins 127 in order to restrain guide pins 127 within clamping member 510.

In some embodiments, clamping member 510 includes driver aperture 525. Driver aperture 525 may be semicylindrical in shape and may provide clearance for swaging tool driver 112. In some embodiments, driver aperture 525 shares a common center axis with moving threads 521 and driver aperture 450 of body 410.

As illustrated in FIGURES 5B and 5C, some embodiments of clamping member 510 include a front face 530 and a rear face 535. In some embodiments, front face 530 and rear face 535 are generally flat. In some embodiments, front face 530 remains flush with front face 415 of body 410 when moving within clamping member chamber 420. Clamping member 510 remains within and moves upwards and downwards within clamping member chamber 420. Clamping member 510 generally matches the shape of clamping member chamber 420. For example, some embodiments of clamping member 510 include a top side 511, a bottom side 512, two vertical sides 513, and two sloped sides 514. Each sloped side 514 is between top side 511 and one of the vertical sides 513, as illustrated. Vertical sides 513 are shorter than corresponding sides of clamping member chamber 420 (i.e., vertical sides 423) to allow clamping member 510 to move upwards and downwards within clamping member chamber 420.

FIGURES 6A-6B illustrate various views of a cam lock 610 that may be used as cam lock 124 of quick-release end effector 120, according to particular embodiments. In some embodiments, cam lock 610 includes a cam dowel aperture 620 for receiving cam dowel 125, a cam lock handle 625, a cam lock body 630, and a locking edge 635. In some embodiments, cam lock handle 625 and cam lock body 630 form a T-shape when viewed from above (e.g., FIGURE 6B). Locking edge 635 contacts top side 511 of clamping member 510 and causes clamping member 510 to move towards stationary threads 428 when cam lock 610 is operated to the closed position. Locking edge 635 is sloped or otherwise curve-shaped such that a distance 606 from a center of cam dowel aperture 620 to a front corner 602 is less than a distance 608 from the center of cam dowel aperture 620 to a back corner 604 of cam lock 610.

In an alternate embodiment, quick-release end effector 120 utilizes a different mechanism from cam lock 124 in order to control the upward and downward movements of clamping member 126. For example, one embodiment of quick-release end effector 120 may utilize pneumatic pressure from swaging tool 110 in order to move clamping member 126 towards stationary threads 128. In another embodiment, quick-release end effector 120 may utilize an electric motor to move clamping member 126 towards stationary threads 128. In yet another embodiment, quick-release end effector 120 may utilize any other appropriate mechanical mechanism to move clamping member 126 towards stationary threads 128. This disclosure anticipates quick-release end effector 120 using any appropriate mechanism to move clamping member 126 towards stationary threads 128 and is not limited to cam lock 124.

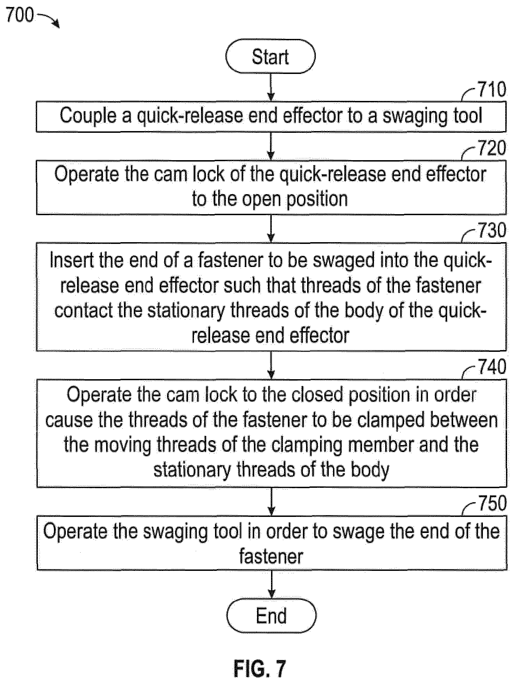

FIGURE 7 is a chart illustrating a method 700 for swaging an end of a fastener, according to particular embodiments. In some embodiments, method 700 may be performed using fastener swaging system 100. At step 710, a quick-release end effector is coupled to a swaging tool. In some embodiments, the quick-release end effector is quick-release end effector 120 and the swaging tool is swaging tool 110. In some embodiments, the quick-release end effector includes a body having a plurality of stationary threads, a clamping member having a plurality of moving threads, and a cam lock configured to operate between an open position and a closed position. In some embodiments, the body is body 410, the clamping member is clamping member 510, and the cam lock is cam lock 610. In some embodiments, the quick-release end effector is screwed to the end of the swaging using threads such as coupling threads 445 of body 410.

At step 720, the cam lock is operated or otherwise confirmed to be in the open position. In some embodiments, the open position permits or otherwise enables the clamping member to move upwards and away from the stationary threads, thereby providing an opening for an end of a fastener to be inserted into the quick-release end effector. An example of the open position is illustrated in FIGURES 2-3. In some embodiments, one or more springs such as springs 129 push the clamping member upwards when the cam lock is operated to the open position.

At step 730, the end of the fastener to be swaged is inserted into the quick-release end effector such that threads of the fastener contact the stationary threads of the body. This step is performed without requiring the fastener to be screwed into the quick-release end effector. Instead, the fastener is inserted into the quick-release end effector such that the threads of the fastener are laid onto the stationary threads of the body. In some embodiments, the fastener is inserted into the quick-release end effector until the end of the fastener contacts a swaging driver of the swaging tool. In some embodiments, the fastener is fastener 130. In some embodiments, the fastener is a captive fastener. In some embodiments, a captive ring is placed onto the captive fastener prior to the end of the fastener being inserted into the quick-release end effector.

At step 740, the cam lock is operated to the closed position in order cause the threads of the fastener to be clamped between the moving threads of the clamping member and the stationary threads of the body. An example of the closed position is illustrated in FIGURE 1. In this step, the moving threads of the clamping member and the stationary threads of the body contact both sides of threads of the fastener and prevent the fastener from moving during swaging operations by the swaging tool. At step 750, the swaging tool is operated in order to swage the end of the fastener. After step 750, method 700 may end.

In some embodiments, method 700 includes an additional step of operating the cam lock back to the open position after the end of the fastener is swaged in step 750. Furthermore, method 700 may include removing the quick-release end effector from the swaged fastener after operating the cam lock back to the open position.

Particular embodiments may repeat one or more steps of the method of FIGURE 7, where appropriate. Although this disclosure describes and illustrates particular steps of the method of FIGURE 7 as occurring in a particular order, this disclosure contemplates any suitable steps of the method of FIGURE 7 occurring in any suitable order. Moreover, although this disclosure describes and illustrates an example method including the particular steps of the method of FIGURE 7, this disclosure contemplates any suitable method including any suitable steps, which may include all, some, or none of the steps of the method of FIGURE 7, where appropriate. Furthermore, although this disclosure describes and illustrates particular components, devices, or systems carrying out particular steps of the method of FIGURE 7, this disclosure contemplates any suitable combination of any suitable components, devices, or systems carrying out any suitable steps of the method of FIGURE 7.

Although the present disclosure and its advantages have been described in detail, it should be understood that various changes, substitutions and alterations can be made herein without departing from the spirit and scope of the disclosure as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

Moreover, the description in this patent document should not be read as implying that any particular element, step, or function can be an essential or critical element that must be included in the claim scope. Also, none of the claims can be intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "member," "module," "device," "unit," "component," "element," "mechanism," "apparatus," "machine," "system," "processor," "processing device," or "controller" within a claim can be understood and intended to refer to structures known to those skilled in the relevant art, as further modified or enhanced by the features of the claims themselves, and can be not intended to invoke 35 U.S.C. § 112(f). Even under the broadest reasonable interpretation, in light of this paragraph of this specification, the claims are not intended to invoke 35 U.S.C. § 112(f) absent the specific language described above.

While the include figures illustrate particular embodiments having particular components, this disclosure contemplates other embodiments having some or all of the described components, as well as additional components not described. Components of the present disclosure may be any suitable shape and may be in any suitable configuration.

As used in this document, "each" refers to each member of a set or each member of a subset of a set. Furthermore, as used in the document "or" is not necessarily exclusive and, unless expressly indicated otherwise, can be inclusive in certain embodiments and can be understood to mean "and/or." Similarly, as used in this document "and" is not necessarily inclusive and, unless expressly indicated otherwise, can be inclusive in certain embodiments and can be understood to mean "and/or."

The disclosure may be embodied in other specific forms without departing from the spirit or essential characteristics thereof. For example, each of the new structures described herein, may be modified to suit particular local variations or requirements while retaining their basic configurations or structural relationships with each other or while performing the same or similar functions described herein. The present embodiments are therefore to be considered in all respects as illustrative and not restrictive. Accordingly, the scope of the disclosures can be established by the appended claims rather than by the foregoing description. All changes which come within the meaning and range of equivalency of the claims are therefore intended to be embraced therein. Further, the individual elements of the claims are not well-understood, routine, or conventional. Instead, the claims are directed to the unconventional inventive concept described in the specification.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A system for swaging an end of a fastener, the system comprising:
a pneumatic swaging tool; and
a quick-release end effector configured to couple to the pneumatic swaging tool, the quick-release end effector comprising:
a body comprising a plurality of stationary threads;
a clamping member comprising a plurality of moving threads; and
a cam lock configured to operate between an open position and a closed position;
wherein in the closed position, a locking edge of the cam lock causes threads of the fastener to be clamped between the moving threads of the clamping member and the stationary threads of the body, thereby securing the fastener during swaging operations by the pneumatic swaging tool.

2. The system of Claim 1, wherein:
the body comprises a plurality of spring apertures;
the clamping member comprises a plurality of spring cavities on a bottom side of the clamping member; and
the quick-release end effector further comprises a plurality of springs, each spring being installed in a particular one of the spring apertures and configured to contact a particular one of the spring cavities of the clamping member.

3. A quick-release end effector configured to couple to a swaging tool, the quick-release end effector comprising:
a body comprising a plurality of stationary threads;
a clamping member comprising a plurality of moving threads; and
a cam lock configured to operate between an open position and a closed position;
wherein in the closed position, a locking edge of the cam lock causes threads of a fastener to be clamped between the moving threads of the clamping member and the stationary threads of the body, thereby securing the fastener during swaging operations by the swaging tool.

4. The system of any one of Claim 1 or Claim 2 or the quick-release end effector of Claim 3, wherein the fastener is a captive fastener.

5. The system of Claim 1 or Claim 2 or Claim 4 or the quick-release end effector of Claim 3 or Claim 4, wherein the body further comprises:
a clamping member chamber configured to contain the clamping member;
a plurality of cam lock shoulders configured to support the cam lock;
a driver aperture configured to permit a swaging tool driver to contact the end of the fastener during swaging; and
a plurality of coupling threads configured to couple the quick-release end effector to the swaging tool.

6. The system of Claim 5 or the quick-release end effector of Claim 5, wherein the clamping member chamber and the clamping member each have a shape comprising:
a top side;
a bottom side opposite the top side;
two vertical sides; and
two sloped sides, wherein each sloped side is between the top side and a particular one of the vertical sides.

7. The system of Claim 5 or Claim 6 or the quick-release end effector of Claim 5 or Claim 6, wherein:
each cam lock shoulder comprises a cam dowel aperture; and
the quick-release end effector comprises a cam dowel that is inserted through the cam dowel apertures and the cam lock, thereby permitted the cam lock to rotate about the cam dowel from the open position to the closed position.

8. The system of Claim 1 or Claim 2 or any one of Claim 4 to Claim 7 or the quick-release end effector of any one of Claim 3 to Claim 7, wherein:
the body comprises a plurality of guide slots; and
the clamping member comprises a plurality of guide pins protruding from opposite sides of the clamping member, wherein each guide pin extends through a particular one of the guide slots of the body.

9. The quick-release end effector of any one of Claim 3 to Claim 8, wherein:
the body comprises a plurality of spring apertures;
the clamping member comprises a plurality of spring cavities on a bottom side of the clamping member; and
the quick-release end effector further comprises a plurality of springs, each spring being installed in a particular one of the spring apertures and configured to contact a particular one of the spring cavities of the clamping member.

10. A method for swaging an end of a fastener, the method comprising:
coupling a quick-release end effector to a swaging tool, the quick-release end effector comprising:
a body comprising a plurality of stationary threads;
a clamping member comprising a plurality of moving threads; and
a cam lock configured to operate between an open position and a closed position; operating the cam lock to the open position;
inserting the end of the fastener to be swaged into the quick-release end effector such that threads of the fastener contact the stationary threads of the body;
operating the cam lock to the closed position in order cause the threads of the fastener to be clamped between the moving threads of the clamping member and the stationary threads of the body; and
operating the swaging tool in order to swage the end of the fastener.

11. The method of Claim 10, wherein the body further comprises:
a clamping member chamber configured to contain the clamping member;
a plurality of cam lock shoulders configured to support the cam lock;
a driver aperture configured to permit a swaging tool driver to contact the end of the fastener during swaging; and
a plurality of coupling threads configured to couple the quick-release end effector to the swaging tool.

12. The method of Claim 11, wherein the clamping member chamber and the clamping member each have a shape comprising:
a top side;
a bottom side opposite the top side;
two vertical sides; and
two sloped sides, wherein each sloped side is between the top side and a particular one of the vertical sides.

13. The method of Claim 11 or Claim 12, wherein:
each cam lock shoulder comprises a cam dowel aperture; and
the quick-release end effector comprises a cam dowel that is inserted through the cam dowel apertures and the cam lock, thereby permitted the cam lock to rotate about the cam dowel from the open position to the closed position.

14. The method of any one of Claim 10 to Claim 13, wherein:
the body comprises a plurality of guide slots; and
the clamping member comprises a plurality of guide pins protruding from opposite sides of the clamping member, wherein each guide pin extends through a particular one of the guide slots of the body.

15. The method of any one of Claim 10 to Claim 14, wherein:
the body comprises a plurality of spring apertures;
the clamping member comprises a plurality of spring cavities on a bottom side of the clamping member; and
the quick-release end effector further comprises a plurality of springs, each spring being installed in a particular one of the spring apertures and configured to contact a particular one of the spring cavities of the clamping member.
